# EUROPEAN PATENT APPLICATION

(11) **EP 4 589 698 A1**
(43) Date of publication of application: **23.07.2025**
(21) Application number: 24211072.4
(22) Date of filing: 06.11.2024
(51) Int. Cl.: H01M 8/04089, H01M 8/04111, H01M 8/04119, H01M 8/04492, H01M 8/04828, H01M 8/10

(54) **CATHODE RECIRCULATION LOOP FOR FUEL CELL**

(30) Priority: 17.01.2024 US 202418415299
(71) Applicant: Honeywell International Inc., Charlotte, NC 28202 (US)
(72) Inventor: KRIZ, Vlastimil, Charlotte, NC 28202 (US); TRNKA, Paval, Charlotte, NC 28202 (US); KNOB, Martin, Charlotte, NC 28202 (US); KOTABA, Ondrej, Charlotte, NC 28202 (US)
(74) Representative: Lucas, Peter Lawrence

(57) **Abstract**

A power generator includes a fuel cell having an anode and a cathode. The cathode includes a cathode input and a cathode output. A cathode output turbine is coupled to the cathode output. A cathode input compressor is coupled to receive and compress ambient air for provision to the cathode input. A cathode recirculation loop is coupled to receive humidified cathode output gas and controllably provide the compressed ambient air and humidified cathode gas to the cathode input. A liquid recirculation loop comprises a liquid separator coupled to an output of the cathode output turbine and the liquid is used to further humidify the gas provided to the cathode input via the recirculation loop. A rotatable mechanical linkage may be coupled between the cathode output turbine and the cathode input compressor to power the cathode input compressor.

## Description

### GOVERNMENT CONTRACT

The project leading to this application has received funding from the Clean Aviation Joint Undertaking under grant agreement No 101101967.

### BACKGROUND

Low temperature hydrogen proton exchange
membrane fuel cells (LT-PEMFC) have cathodes that should be supplied by humidified compressed air. Ambient air contains some humidity but is usually not sufficiently humid. Humidity in a vapor form is available at an outlet of the fuel cell cathode. Typically, air from the cathode output is transported to the cathode inlet by a membrane humidifier. However, this solution is prohibitive in volume for high-power aircraft fuel cell systems. Alternative solutions use a water scrubbing system at the cathode outlet and a humidification system with a spray humidifier on the cathode inlet. However, these solutions require large volumes and significant weight in components, making them prohibitive for aircraft applications.

### SUMMARY

A power generator includes a fuel cell having an anode and a cathode. The cathode includes a cathode input and a cathode output. A cathode output turbine is coupled to the cathode output. A cathode input compressor is coupled to receive and compress ambient air for provision to the cathode input. A cathode recirculation loop is coupled to receive humidified cathode output gas and controllably provide the compressed ambient air and humidified cathode gas to the cathode input. A liquid recirculation loop may utilize a liquid separator coupled to an output of the cathode output turbine and use the liquid to further humidify the gas provided to the cathode input via the recirculation loop.

A rotatable mechanical linkage may be coupled between the cathode output turbine and the cathode input compressor to power the cathode input compressor.

### BRIEF DESCRIPTION OF THE DRAWINGS

FIG. 1 is a block flow diagram illustrating a power generator having a cathode recirculation loop according to an example embodiment.
FIG. 2 is a block flow diagram illustrating a power generator having an alternative cathode recirculation loop according to an example embodiment.
FIG. 3 is a block flow diagram illustrating a power generator utilizing a turbine to power a compressor according to an example embodiment.
FIG. 4 is a block flow diagram illustrating a power generator that utilizes a mechanical coupling to transfer rotational energy from turbine a to a compressor according to an example embodiment.
FIG. 5 is a block flow diagram illustrating a power generator that utilizes a cathode recirculation loop according to an example embodiment.
FIG. 6 is a block flow diagram illustrating a power generator which utilizes a blower in a recirculation loop to return cathode output air between a humidifier and an intercooler according to an example embodiment.
FIG. 7 is a block flow diagram illustrating a power generator which uses a compressor to compress ambient air and also includes a blower in the recirculation loop to return cathode output air between a humidifier and an intercooler according to an example embodiment.
FIG. 8 is a block flow diagram of a liquid separator according to an example embodiment.
FIG. 9 is a block schematic diagram of a computer system to implement one or more example embodiments.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

Low temperature hydrogen proton exchange membrane fuel cells (LT-PEMFC) have anodes that receive hydrogen and have cathodes that should be supplied by humidified compressed air. The hydrogen and oxygen are combined to produce electricity and water. Power generators that include such fuel cells are used in a variety of applications, such as providing power for aircraft.

Ambient air contains some humidity but is usually not sufficiently humid for provision to the cathode, especially at high altitudes or in cold environments. Humidity in a vapor form is available at an outlet of the fuel cell cathode and may be transported back to the cathode inlet by use of a membrane humidifier. Alternative solutions use a water scrubbing system at the cathode outlet and a humidification system with a spray humidifier on the cathode inlet. However, these solutions require large volumes and significant weight in components, making them prohibitive for high-power aircraft fuel cell systems.

An improved fuel cell power generation system is configured to directly recirculate humid air from a cathode output to the cathode input via a recirculation loop. Various configurations may include the use of a valve or blower in the recirculation loop. An output turbine may also be used to drive an input compressor. Liquid separators may also be used with a pump and humidifier to further recirculate water from the cathode output. These configurations help provide additional humidity to the cathode input without the need for additional weight and volume that may be encountered with prior solutions or water reservoirs.

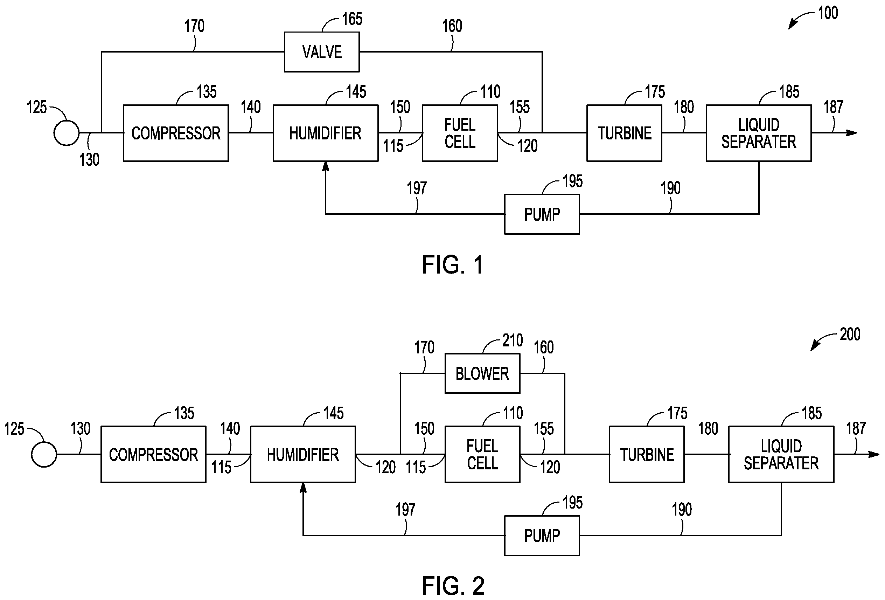

FIG. 1 is a block flow diagram illustrating a power generator 100 having a cathode recirculation loop. Generator 100 includes an LT-PEMFC fuel cell 110. Fuel cell 110 includes a cathode input 115 and a cathode output 120. Several example generators will be shown and described in further figures utilizing the same reference numbers for like components.

Cathode input 115 requires compressed humidified air for the fuel cell 110 to operate well. In one example, air 125, such as ambient air is received by generator 100 and provided via a conduit 130 to a first compressor 135. Compressor 135 compresses the air and provides compressed air via a conduit 140 to a humidifier 145. The humidifier 145 increases the humidity of the air and provides the further humidified air via conduit 150 to the cathode input 115.

The fuel cell 110 also includes an anode and hydrogen fuel, which is not shown for ease of illustration of examples directed to providing humidified air to the cathode.

The humidified air is processed by the fuel cell to produce electricity and water. The water, which may be in liquid and in vapor form of humidity in air output via cathode output 120 is provided via conduit 155. A recirculation conduit 160 provides the cathode output air to a valve 165, which is controlled via a controller to provide the air output via a conduit 170 to the compressor 135. The cathode output air is effectively added to the ambient air 125, compressed via compressor 135, humidified via humidifier 145, and provided back to the cathode input 115, creating a cathode recirculation loop.

The cathode output air from cathode output 120 is also provided via conduit 155 to a turbine 175, causing the turbine 175 to rotate. Air output from the turbine 175 is provided via conduit 180 to a liquid separator 185. Liquid separator 185 separates out water in liquid form from the air and provides the liquid via a liquid conduit 190 to a pump 195. Air from liquid separator 185 is exhausted on an exhaust conduit 187. Pump 195 pumps the water via conduit 197 to the humidifier 145, resupplying the humidifier with water for humidification of the air input to the cathode input 115. Liquid separator 185, conduits 190 and 197, pump 195, and humidifier 145 operate a liquid recirculation loop.

FIG. 2 is a block flow diagram illustrating a power generator 200 having an alternative cathode recirculation loop. Power generator 200 includes a blower 210 between conduits 160 and 170. In addition, conduit 170 is coupled to conduit 150 to provide recirculated humid cathode output air directly to cathode input 115 as opposed to providing the recirculated cathode output aire to the cathode input 115 via compressor 135 and humidifier 145 as in generator 100. The blower 210 may controlled by a controller to ensure the cathode output air is properly compressed to flow to the cathode input 115.

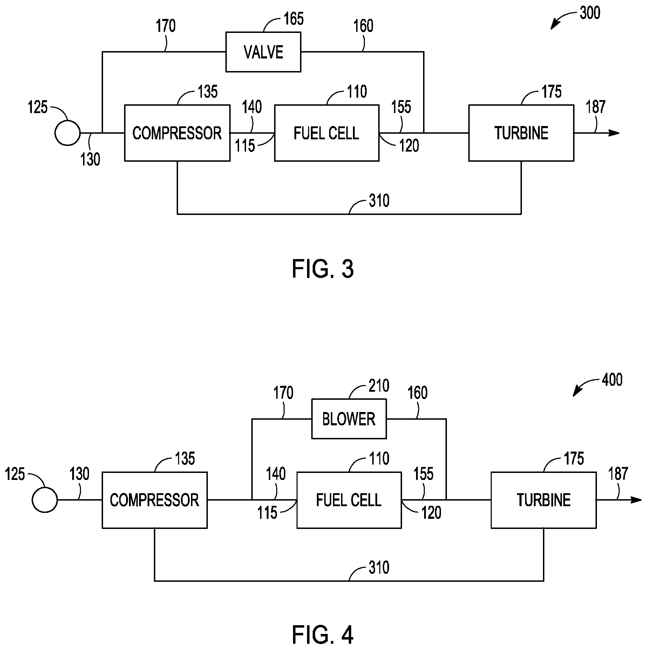

FIG. 3 is a block flow diagram illustrating a power generator 300 utilizing turbine 175 to power compressor 135. In one example, the turbine 175, which is rotating from cathode output air, is mechanically coupled via mechanical coupling 310 to rotate components in the compressor to enable the compressor 135 to compress air. The use of mechanical coupling 310 is more efficient than using the turbine to generate electricity and use that electricity to power a motor in the compressor.

The cathode recirculation loop includes valve 165 and is coupled to the input of the compressor 135.

FIG. 4 is a block flow diagram illustrating a power generator 400 that utilizes the mechanical coupling 310 to transfer rotational energy from turbine 175 to compressor 135. Generator 400 also utilizes blower 210 in the recirculation loop to enable provision of cathode output air directly to the cathode input 115 of fuel cell 110.

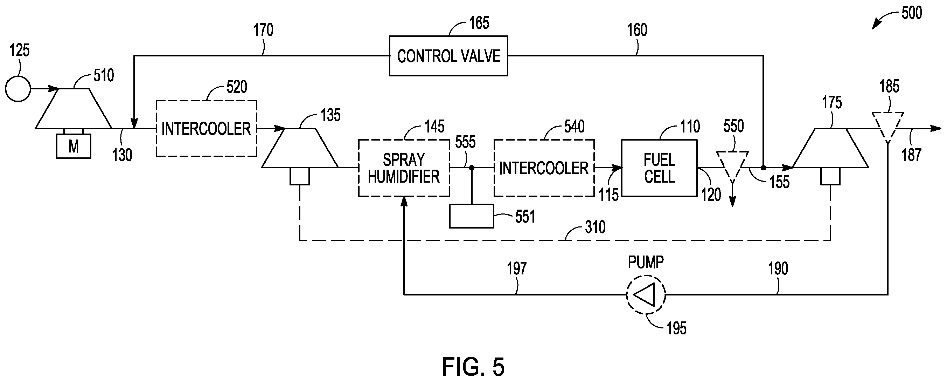

FIG. 5 is a block flow diagram illustrating a power generator 500 that utilizes a cathode recirculation loop. Generator 500 is similar to generator 100 with additional components. In one example, generator 500 includes a electrical compressor 510 coupled to ambient air 125 to provide an initial compression of the ambient air via conduit 130 to an optional intercooler 520. Compressor 510 is upstream of the compressor 135 in one example.

Compressing air can cause an increase in temperature of the compressed air. The intercooler 520 may be used to help reduce the temperature of the compressed air prior to it being provided to the cathode input 115. The intercooler 520 provides the cooled compressed air to compressor 135, which is optionally powered via mechanical coupling 310. In one example, humidifier 145 may be a spray humidifier, which may be followed by an optional second intercooler 540 to again cool the further compressed air from compressor 135. Cooling of the air may be performed to obtain a desired temperature for operation of the fuel call 110 in an efficient manner to generate optimal amounts of electricity.

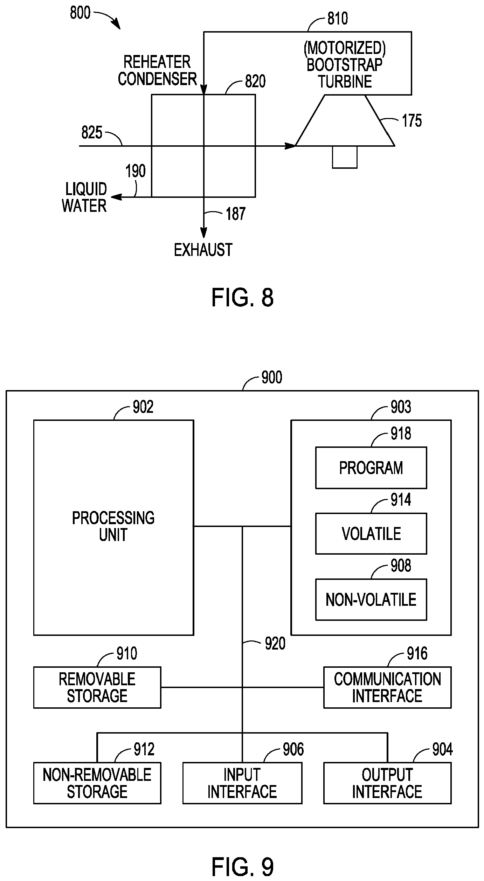

In one example, a humidity sensor 551 is coupled to an output 555 of the humidifier 145 to sense humidity of gas provided to the cathode input 115. A controller, shown in FIG. 9, may be used as a means of controlling gas flow in the cathode recirculation loop to control the humidity of the gas provided to the cathode input 115. The controller may also be used to control operation of the pump 195 and spray humidifier to further control the humidity of the gas provided to the cathode input 115.

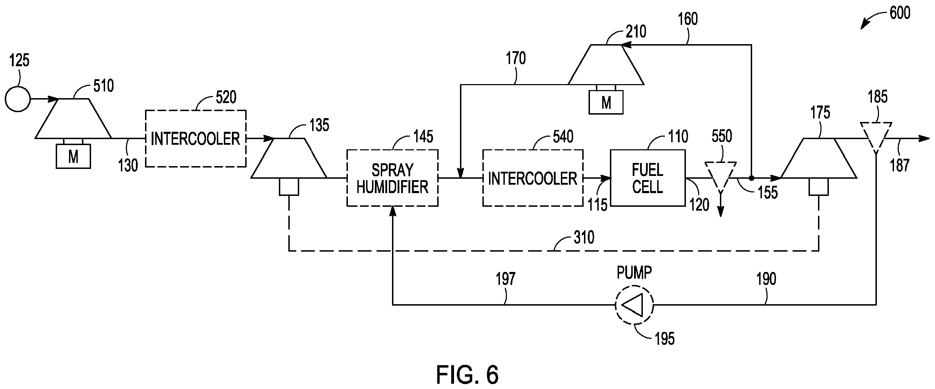

FIG. 6 is a block flow diagram illustrating a power generator 600 which utilizes blower 210 in the recirculation loop, which returns cathode output air between humidifier 145 and intercooler 540. Generator 600 also includes compressor 510, intercooler 520, compressor 135, spray humidifier 145, intercooler 450, fuel cell 110, liquid separator 550, turbine 175, and liquid separator 185. In further examples, the recirculation loop may return cathode output air between compressor 135 and humidifier 145.

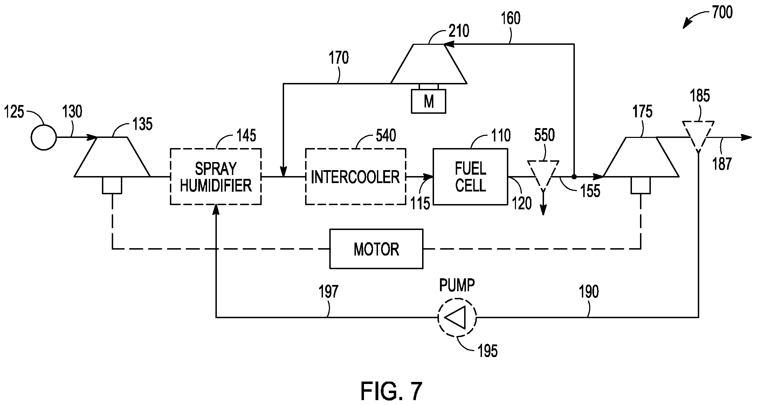

FIG. 7 is a block flow diagram illustrating a power generator 700 which uses compressor 135 to compress ambient air 125 and also includes blower 210 in the recirculation loop to return cathode output air between humidifier 145 and intercooler 540. Generator 600 also includes spray humidifier 145, intercooler 450, fuel cell 110, liquid separator 550, turbine 175, and liquid separator 185.

FIG. 8 is a block flow diagram of a liquid separator 800. Separator 800 includes the turbine 175 having an output conduit 810 coupled to a condenser. An input conduit 825 provides cathode output air from conduit 155 directly to the condenser 820. The condenser separates liquid water from the turbine and cathode outputs and provides the water on conduit 190 towards the spray humidifier 145. The condenser 820 may be used to replace two liquid separators. In one example, the condenser 820 may be a reheater condenser. Exhaust conduit 187 may be used to exhaust air output from condenser 820.

FIG. 9 is a block schematic diagram of a computer system 900 that may be configured to operate as a controller for the various electrical components, including the compressors 135, 510, valve 165, blower 210, pump 195, and other electrical components. Various control algorithms based on proportional/integral/derivative (PID) control or other algorithms may be used to optimize performance of the various power generators described herein. System 900 may also be used for performing methods and algorithms according to examples. All components need not be used in various examples.

One example computing device in the form of a computer 900 may include a processing unit 902, memory 903, removable storage 910, and non-removable storage 912. Although the example computing device is illustrated and described as computer 900, the computing device may be in different forms in different embodiments. For example, the computing device may instead be a smartphone, a tablet, smartwatch, smart storage device (SSD), or other computing device including the same or similar elements as illustrated and described with regard to FIG. 9. Devices, such as smartphones, tablets, and smartwatches, are generally collectively referred to as mobile devices or user equipment.

Although the various data storage elements are illustrated as part of the computer 900, the storage may also or alternatively include cloud-based storage accessible via a network, such as the Internet or server-based storage. Note also that an SSD may include a processor on which the parser may be run, allowing transfer of parsed, filtered data through I/O channels between the SSD and main memory.

Memory 903 may include volatile memory 914 and non-volatile memory 908. Computer 900 may include - or have access to a computing environment that includes - a variety of computer-readable media, such as volatile memory 914 and non-volatile memory 908, removable storage 910 and non-removable storage 912. Computer storage includes random access memory (RAM), read only memory (ROM), erasable programmable read-only memory (EPROM) or electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 900 may include or have access to a computing environment that includes input interface 906, output interface 904, and a communication interface 916. Output interface 904 may include a display device, such as a touchscreen, that also may serve as an input device. The input interface 906 may include one or more of a touchscreen, touchpad, mouse, keyboard, camera, one or more device-specific buttons, one or more sensors integrated within or coupled via wired or wireless data connections to the computer 900, and other input devices. The computer may operate in a networked environment using a communication connection to connect to one or more remote computers, such as database servers. The remote computer may include a personal computer (PC), server, router, network PC, a peer device or other common data flow network switch, or the like. The communication connection may include a Local Area Network (LAN), a Wide Area Network (WAN), cellular, Wi-Fi, Bluetooth, or other networks. According to one embodiment, the various components of computer 900 are connected with a system bus 920.

Computer-readable instructions stored on a computer-readable medium are executable by the processing unit 902 of the computer 900, such as a program 918. The program 918 in some embodiments comprises software to implement one or more methods described herein. A hard drive, CD-ROM, and RAM are some examples of articles including a non-transitory computer-readable medium such as a storage device. The terms computer-readable medium, machine readable medium, and storage device do not include carrier waves or signals to the extent carrier waves and signals are deemed too transitory. Storage can also include networked storage, such as a storage area network (SAN). Computer program 918 along with the workspace manager 922 may be used to cause processing unit 902 to perform one or more methods or algorithms described herein.

### Examples:

1. A system includes a fuel cell having an anode and a cathode, the cathode including a cathode input and a cathode output. A cathode output turbine is coupled to the cathode output. A cathode input compressor is coupled to receive and compress ambient air for provision to the cathode input, A cathode recirculation loop is coupled to receive humidified cathode output gas and controllably provide the compressed ambient air and humidified cathode gas to the cathode input. A liquid recirculation loop includes a liquid separator coupled to an output of the cathode output turbine and configured to provide condensed water to a liquid conduit and a humidifier coupled to humidify compressed ambient air to the cathode input.
2. The system of example 1 wherein the cathode output turbine is mechanically coupled to the cathode input compressor.
3. The system of example 2 and further including a motor coupled to drive the cathode input compressor.
4. The system of any of examples 2-3 and further including an ambient air compressor coupled upstream of the cathode input compressor, wherein the cathode recirculation loop is coupled between the ambient air compressor and the cathode input compressor.
5. The system of any of examples 1-4 wherein the cathode recirculation loop is coupled to the cathode input downstream of the cathode input compressor.
6. The system of any of examples 1-5 and further including an ambient air compressor coupled upstream of the cathode input compressor, wherein the cathode recirculation loop is coupled between the ambient air compressor and the cathode input compressor.
7. The system of example 6 wherein the ambient air compressor includes a motor.
8. The system of any of examples 1-7 and further including an ambient air compressor coupled upstream of the cathode input compressor, wherein the cathode recirculation loop is coupled between the cathode input compressor and the cathode input.
9. The system of any of examples 1-8 and further including a humidity sensor coupled to sense humidity of gas provided to the cathode input, means for controlling gas flow in the cathode recirculation loop, and a controller coupled to means for controlling gas flow in the cathode recirculation loop to control the humidity of the gas provided to the cathode input.
10. The system of example 9 wherein the means for controlling gas flow in the cathode recirculation loop includes a blower or a valve.
11. The system of any of examples 1-10 and further including a liquid separator coupled to receive humidified cathode output gas and separate out condensed water, a liquid conduit coupled to receive the condensed water, and wherein the humidifier comprises a spray humidifier coupled to the liquid conduit to receive the condensed water and coupled to the cathode recirculation loop to further humidify the humidified gas in the cathode recirculation loop.
12. The system of example 11 and further including a pump positioned in the liquid conduit.
13. The system of any of examples 1-12 and further including an intercooler positioned downstream of the cathode input compressor.
14. A power generator includes a fuel cell having an anode and a cathode, the cathode including a cathode input and a cathode output. A cathode output turbine is coupled to the cathode output. A cathode input compressor is coupled to receive and compress air for provision to the cathode input. A rotatable mechanical linkage is coupled between the cathode output turbine and the cathode input compressor. A cathode recirculation loop is coupled to receive humidified cathode output gas and controllably provide the compressed ambient air and humidified cathode gas to the cathode input. An ambient air compressor is coupled upstream of the cathode input compressor, wherein the cathode recirculation loop is coupled between the ambient air compressor and the cathode input compressor.
15. The system of example 14 and further including a humidity sensor coupled to sense humidity of gas provided to the cathode input, means for controlling gas flow in the cathode recirculation loop, and a controller coupled to means for controlling gas flow in the cathode recirculation loop to control the humidity of the gas provided to the cathode input.
16. The system of example 15 wherein the means for controlling gas flow in the cathode recirculation loop includes a blower or a valve.
17. The system of any of examples 14-16 and further including a liquid separator coupled to receive humidified cathode output gas and separate out condensed water, a liquid conduit coupled to receive the condensed water, and a spray humidifier coupled to the liquid conduit to receive the condensed water and coupled to the cathode recirculation loop to further humidify the humidified gas in the cathode recirculation loop.
18. The system of example 17 and further including a pump positioned in the liquid conduit.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

The functionality can be configured to perform an operation using, for instance, software, hardware, firmware, or the like. For example, the phrase "configured to" can refer to a logic circuit structure of a hardware element that is to implement the associated functionality. The phrase "configured to" can also refer to a logic circuit structure of a hardware element that is to implement the coding design of associated functionality of firmware or software. The term "module" refers to a structural element that can be implemented using any suitable hardware (e.g., a processor, among others), software (e.g., an application, among others), firmware, or any combination of hardware, software, and firmware. The term, "logic" encompasses any functionality for performing a task. For instance, each operation illustrated in the flowcharts corresponds to logic for performing that operation. An operation can be performed using, software, hardware, firmware, or the like. The terms, "component," "system," and the like may refer to computer-related entities, hardware, and software in execution, firmware, or combination thereof. A component may be a process running on a processor, an object, an executable, a program, a function, a subroutine, a computer, or a combination of software and hardware. The term, "processor," may refer to a hardware component, such as a processing unit of a computer system.

Furthermore, the claimed subject matter may be implemented as a method, apparatus, or article of manufacture using standard programming and engineering techniques to produce software, firmware, hardware, or any combination thereof to control a computing device to implement the disclosed subject matter. The term, "article of manufacture," as used herein is intended to encompass a computer program accessible from any computer-readable storage device or media. Computer-readable storage media can include, but are not limited to, magnetic storage devices, e.g., hard disk, floppy disk, magnetic strips, optical disk, compact disk (CD), digital versatile disk (DVD), smart cards, flash memory devices, among others. In contrast, computer-readable media, i.e., not storage media, may additionally include communication media such as transmission media for wireless signals and the like.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A system (100) comprising:
a fuel cell (110) having an anode and a cathode, the cathode including a cathode input (115) and a cathode output (120);
a cathode output turbine (175) coupled to the cathode output;
a cathode input compressor (135) coupled to receive and compress ambient air (125) for provision to the cathode input;
a cathode recirculation loop (160, 165, 170) coupled (155) to receive humidified cathode output gas and controllably provide the compressed ambient air and humidified cathode gas to the cathode input; and
a liquid recirculation loop comprising:
a liquid separator (185) coupled to an output (150) of the cathode output turbine and configured to provide condensed water to a liquid conduit (190); and
a humidifier (145) coupled to humidify compressed ambient air to the cathode input.

2. The system of claim 1 wherein the cathode output turbine is mechanically coupled (310) to the cathode input compressor.

3. The system of claim 2 and further comprising a motor (130) coupled to drive the cathode input compressor.

4. The system of claim 2 and further comprising an ambient air compressor (510) coupled upstream of the cathode input compressor, wherein the cathode recirculation loop is coupled between the ambient air compressor and the cathode input compressor.

5. The system of any one of claims 1-4 wherein the cathode recirculation loop is coupled to the cathode input downstream of the cathode input compressor.

6. The system of any one of claims 1-4 and further comprising an ambient air compressor (510) coupled upstream of the cathode input compressor, wherein the cathode recirculation loop is coupled between the ambient air compressor and the cathode input compressor.

7. The system of any one of claims 1-4 and further comprising:
a humidity sensor (551) coupled to sense humidity of gas provided to the cathode input;
means (165, 210) for controlling gas flow in the cathode recirculation loop;
and a controller (900) coupled to means for controlling gas flow in the cathode recirculation loop to control the humidity of the gas provided to the cathode input.

8. The system of any one of claims 1-4 and further comprising:
a liquid separator (185) coupled to receive humidified cathode output gas and separate out condensed water;
a liquid conduit (190) coupled to receive the condensed water; and
wherein the humidifier comprises a spray humidifier coupled to the liquid conduit to receive the condensed water and coupled to the cathode recirculation loop to further humidify the humidified gas in the cathode recirculation loop.

9. The system of claim 8 and further comprising a pump (195) positioned in the liquid conduit.

10. The system of any one of claims 1-4 and further comprising an intercooler (540) positioned downstream of the cathode input compressor.
